# EUROPEAN PATENT APPLICATION

(11) **EP 2 266 864 A2**
(43) Date of publication of application: **29.12.2010**
(21) Application number: 10166416.7
(22) Date of filing: 17.06.2010
(51) Int. Cl.: B62D 7/04, B62D 59/04, B62D 11/04, B62D 13/02, B62D 9/00, B60K 7/00, B60P 1/02, B62D 61/12

(54) **Rubber-tyred steering carriage and trailer with such**

(30) Priority: 18.06.2009 IT TO20090462
(71) Applicant: Industrie Cometto S.p.A., 12011 Borgo San Dalmazzo (IT)
(72) Inventor: Ghinamo, Paolo, 12012 Boves (IT); Terzuolo, Pierluigi, 12100 Cuneo (IT)
(74) Representative: Jorio, Paolo

(57) **Abstract**

A trailer (1) having a frame (2) defining a loading bed (3); and a number of rubber-tyred steering carriages (4) connected to the frame (2). Each carriage (4) has a respective axle (5); and a respective variable-length, vertical column (27) connected to the axle (5) and hinged to the frame (2) to rotate about and translate along a fixed hinge axis (28). Each axle (5) has a beam (6); and two hubs (8) which are connected in rotary manner to opposite end portions of the beam (6) and on opposite sides of the vertical column (27), are fitted with respective rubber-tyred wheels (11), and are each powered by a respective motor (18) controlled independently of the other motor (18) to move the carriage (4) forward and/or steer the axle (5) about the fixed hinge axis (28).

## Description

The present invention relates to a rubber-tyred steering carriage, and a trailer equipped with such a carriage.

For transporting loads using rubber-tyred vehicles, trailers are used, which are drawn by a tractor, and comprise a frame defining a loading bed; and a number of rubber-tyred axles, each of which is connected to the frame by a respective vertical mechanical pivot, and is steered about the pivot axis and with respect to the frame by one or more controlled hydraulic linear actuators. Depending on the size of the payload, each axle comprises two or more idle wheels, which are movable to and from the loading bed under the control of respective hydraulic suspensions, each of which comprises a toggle joint and a hydraulic reaction cylinder.

Though widely used, known rubber-tyred axle/hydraulic suspension assemblies are relatively complex manufacturing-wise, but, above all, are bulky crosswise, which means they cannot be compacted to increase the number of axles for a given trailer size, and so increase the payload per unit area of the loading bed.

Commonly used known suspensions also make it difficult, if not impossible, to keep the loading bed strictly level, i.e. horizontal, as the trailer travels along road surfaces of varying gradients.

Lastly, the design and layout of the hydraulic circuits powering the cylinders on known trailers are such that, in normal use, the circuits may rub against the trailer frame or come into contact with foreign bodies, thus resulting in damage to the extent of even endangering the support and stability of the payload.

It is an object of the present invention to provide a steering carriage designed to provide a straightforward, low-cost solution to the above drawbacks, and which in particular is compact, efficient, reliable, and at the same time cheap and easy to produce.

According to the present invention, there is provided a rubber-tyred steering carriage comprising an axle, in turn comprising a horizontal fastening beam, at least two independent hubs connected to said beam to rotate about a common axis of rotation, and at least one rubber-tyred wheel connected to each said hub; the carriage also comprising a variable-length fastening column for transferring load onto said beam, and connected to the beam, between said hubs; connecting means for connecting said fastening column to a supporting body, so as to rotate about a first hinge axis perpendicular to said common axis of rotation, and slide axially along said first hinge axis; adjusting means for adjusting the length of said fastening column parallel to said first hinge axis; and, for each said hub, a respective drive motor connected angularly to the respective hub, and control means for controlling said motors independently, and rotating said axle about said first hinge axis.

A number of non-limiting embodiments of the invention will be described by way of example with reference to the accompanying drawings, in which:
Figure 1 shows a partial view in perspective of a rubber-tyred trailer featuring a number of rubber-tyred steering carriages in accordance with the teachings of the present invention;
Figure 2 shows a larger-scale, partly sectioned view of a detail in Figure 1;
Figure 3 shows a larger-scale section of a detail in Figure 2;
Figure 4 shows a larger-scale section of a detail in Figure 2 in a different operating position;
Figures 5 and 6 show partly sectioned views of two variations of a further detail in Figure 2.

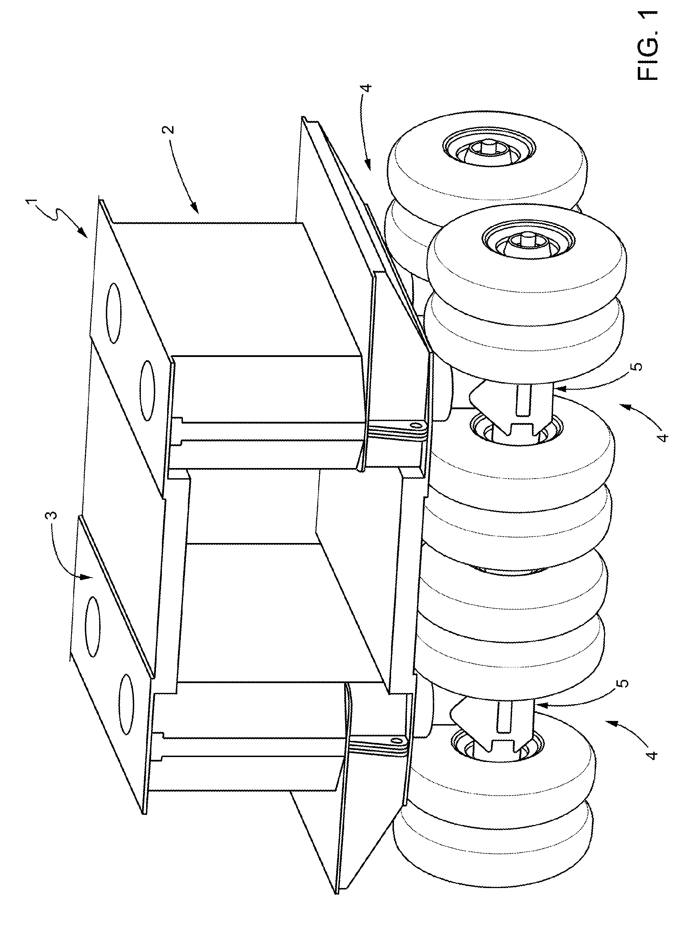

Number 1 in Figure 1 indicates as a whole a rubber-tyred trailer comprising a frame 2 defining a loading bed 3; and a number of adjacent rubber-tyred steering carriages 4 underneath frame 2.

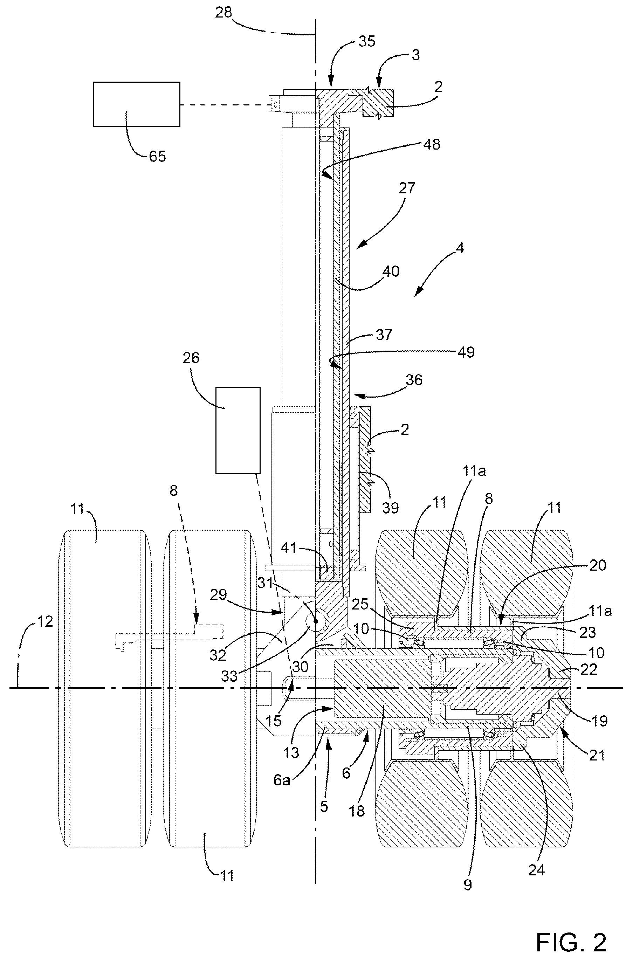

As shown in Figure 1 and in more detail in Figure 2, each carriage 4 comprises an axle 5, in turn comprising a hollow horizontal beam 6, and two independent hubs 8 fitted to respective opposite end portions 9 of beam 6 by means of respective bearings 10, and each fitted stably and releasably with a pair of side by side wheels 11 which rotate, together with the relative hub, about a hinge axis 12.

Each hub 8 is powered by a respective motor reducer 13 housed partly in respective end portion 9 and cooled by airflow through openings 15 in beam 6. More specifically, each motor reducer comprises an electric or hydraulic rotary motor 18 housed entirely inside beam 6; and an epicyclic reducer 19 aligned with motor 18 and projecting axially outwards of beam 6 through an axial opening 20 of beam 6, by which to insert/remove the whole of motor reducer 13 without removing wheels 11 from hub 8. Each epicyclic reducer 19 is connected, in an axially and angularly fixed position, to motor 18 on one side, and, on the other side, to a respective cup-shaped body 21 fitted firmly to hub 8 and closing opening 20. More specifically, each cup-shaped body 21 comprises an end wall 22, to which epicyclic reducer 19 is fitted; and a lateral wall 23 with an outer radial end flange 24. Each radial flange 24 is connected firmly to relative hub 8 by respective screws (not shown), and grips the rims 11a of relative wheels 11 against an opposite axial shoulder 25 of relative hub 8.

Each motor 18 is feedback controlled, independently of the other motors 18, by a known control unit 26 (Figure 2).

As shown in Figure 2, each carriage 4 also comprises a variable-length fastening column 27 for transferring load from loading bed 3 to beam 6, and for keeping loading bed 3 level, i.e. substantially horizontal, regardless of the gradient of the rolling surface of wheels 11.

Column 27 has a vertical axis 28 perpendicular to axis 12, and comprises a bottom end hinge portion 29 connected to an intermediate portion 6a of beam 6, between hubs 8, by a hinge 30 which allows relative oscillation of beam 6 and column 27 about a hinge axis 31 perpendicular to axes 12 and 28.

In the example shown, hinge 30 comprises a fork 32 integral with and projecting upwards from portion 6a; and a hinge pin 33 coaxial with axis 31 and extending through hinge portion 29, so that hinge axis 31 extends above beam 6. In a variation not shown, fork 32 is designed to extend alongside or beneath beam 6, so that hinge axis 31 intersects or extends beneath beam 6.

As shown in Figure 2, at the opposite end to that connected to beam 6, column 27 terminates with a fastening head 35 located close to loading bed 3 and connected firmly to frame 2 by screws (not shown). Between fastening head 35 and bottom end hinge portion 29, column 29 comprises an adjusting assembly 36 for adjusting the length of column 27, i.e. the distance between head 35 and hinge portion 29.

In the preferred embodiment shown in Figure 2, adjusting assembly 36 comprises a double-acting hydraulic linear actuator, in turn comprising a cylindrical outer sleeve 37 which extends coaxially with axis 28, is connected firmly to hinge portion 29, and engages, in rotary and axially-sliding manner, a bushing or guide sleeve 39 fitted firmly to frame 2, coaxially with axis 28 and close to hinge portion 29. Assembly 36 also comprises a hollow rod 40 which extends coaxially with axis 28, in turn comprises a top end portion connected firmly to head 35, and terminates at the opposite end with a piston 41 engaging sleeve 37 in fluidtight manner.

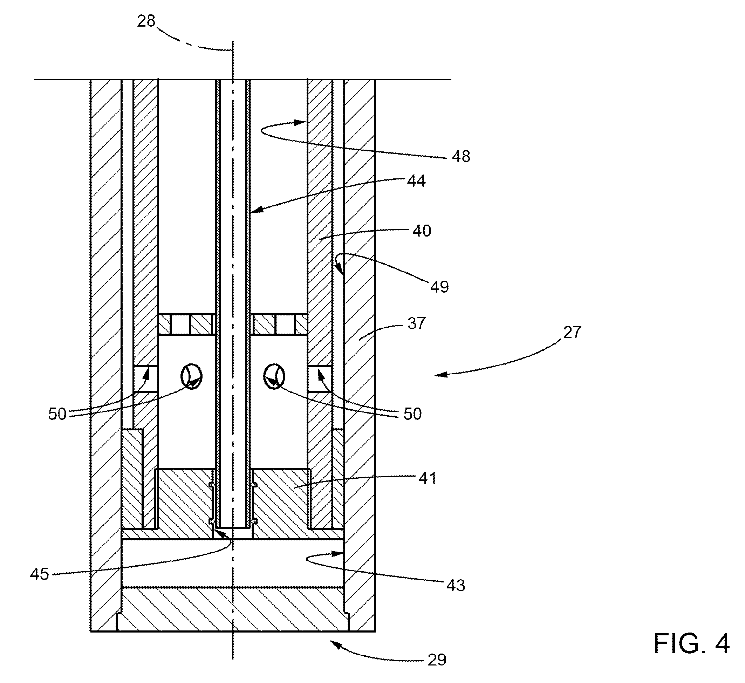

As shown in Figure 2 and in more detail in Figure 4, piston 41, sleeve 37, and hinge portion 29 define a bottom chamber 43 which in use contains a pressurized fluid fed to it by a feed pipe 44 extending inside rod 40, coaxially with axis 28, and through an opening 45 in piston 41, to which pipe 44 is connected in fluidtight manner. The portion 44a of pipe 44 opposite the portion extending through piston 41 is connected in fluidtight manner to head 35, and communicates externally along an L-shaped conduit 46 formed in head 35 and having a radial inlet/outlet portion 47.

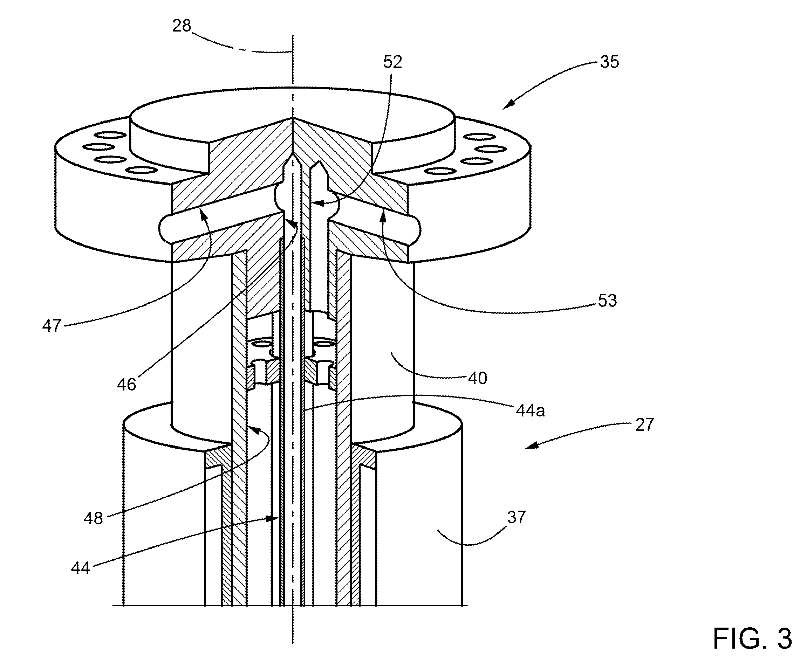

As shown in Figure 2 and in more detail in Figures 3 and 4, rod 40 defines a chamber 48 inside itself, and an annular chamber 49 with sleeve 37; and both chambers 48 and 49 are isolated in fluidtight manner from chamber 43, and communicate with each other through a number of radial holes 50 formed through a portion of rod 40 above piston 41 (Figure 4).

As shown in Figure 3, chamber 48 communicates externally along an inlet/outlet conduit 52 formed in head 35 and which, like conduit 46, comprises a radial fluid inlet/outlet portion 53.

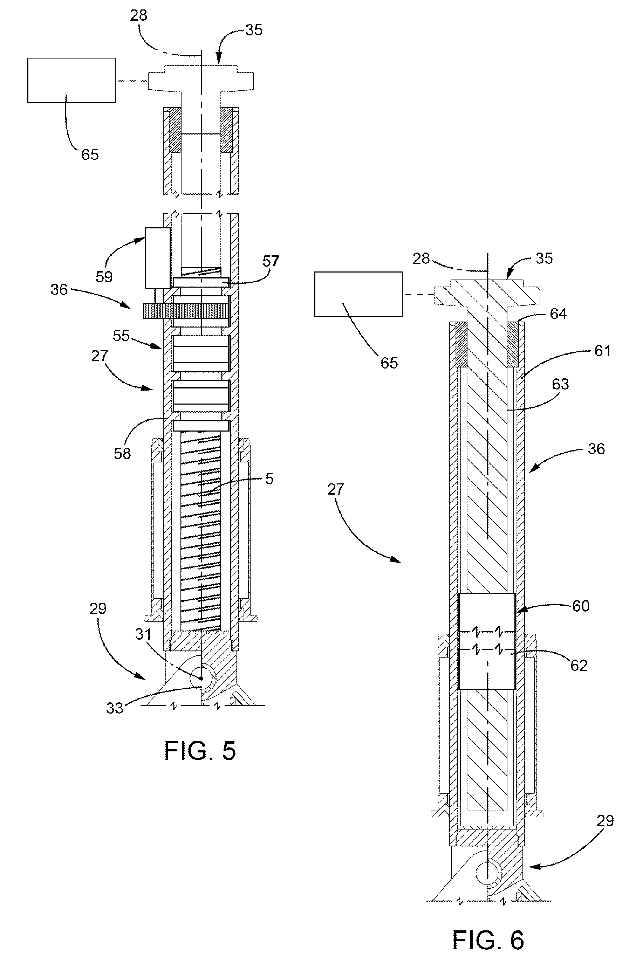

In the Figure 5 variation, adjusting assembly 36 comprises a screw-nut screw assembly 55, the screw 56 of which extends coaxially with axis 28, is connected firmly to head 35, and engages a nut screw 57. Nut screw 57 is connected in an axially fixed position to a preferably, though not necessarily, tubular guide 58, and is rotated about axis 28 by a respective electric or hydraulic motor reducer 59 connected to guide 58 and conveniently connected to nut screw 57 by a mechanical gear transmission. In the Figure 5 example, motor reducer 59 is located partly outside guide 58, but, in a variation, extends completely inside guide 58.

In the Figure 6 variation, adjusting assembly 36 comprises a linear electric motor 60 having a cylindrical stator guide member 61 coaxial with axis 28 and connected firmly to bottom end portion 29, and a movable member 62 which translates along axis 28 and is connected integrally to head 35 by a rod 63 guided by pads 64.

Regardless of its design, assembly 36 is controlled by a further control unit 65 which determines the slope of the rolling surface of wheels 11, and therefore of trailer 1, and, in response, commands assembly 36 to keep loading bed 3 substantially horizontal or within an angular range imposed by the payload.

As trailer 1 moves along, each carriage 4 is position-controlled continuously by unit 26 which, on the basis of the trajectory of trailer 1 and the position of carriage 4 beneath loading bed 3, rotates axle 5 with respect to frame 2 about axis 28 of column 27. Each axle 5 is rotated by operating either one or both motors 18 of axle 5.

As will be clear from the above description, carriages 4 are extremely straightforward manufacturing-wise and, above all, highly compact perpendicular to hinge axis 28. This is mainly the result of each carriage 4 being connected to frame 2 by a cylindrical column connected to frame 2 at two vertically spaced points : one at the top end of column 27 and therefore close to loading bed 3, and the other close to end portion 29 and therefore axle 5.

Unlike known solutions, using a narrow cylindrical column 27 simply hinged to axle 5, the length of axle 5 can be greatly reduced, so a large number of axles can be arranged side by side, as shown in Figure 1, and the payload per unit area of the loading bed increased accordingly.

In addition to the above advantages afforded by the narrow width of the column, using the hydraulic actuator described makes for an extremely rigid column 27. This is due to both rod 40 and chamber 49 being filled with pressurized fluid, thus enabling column 27 to withstand severe bending loads and components, by comprising multiple radial layers.

Again from the functional standpoint, the fact that bottom chamber 43 can be fed with pressurized fluid separately from chambers 48 and 49 means that, in the event of a malfunction of wheels 11 or axle 5, the relative carriage 4 can be isolated by lifting it off the rolling surface of wheels 11.

In the case of a hydraulic assembly 36 for adjusting the length of column 27, head 35 serves both as a load-bearing plate and as a hydraulic member through which to feed fluid to both bottom chamber 43 and central and lateral chambers 48 and 49, thus preventing any relative movement between frame 2 and the pressurized-fluid feed pipe to chambers 43, 48, 49, and so providing for greater safety and reliability of carriage 4 as compared with known solutions. Moreover, the fact that part of the feed pipe extends inside rod 40 means rigid pipes, as opposed to hoses, can be used, thus improving efficiency and reliability, and reducing manufacturing cost.

Clearly, changes may be made to carriages 4 as described herein without, however, departing from the protective scope as defined in the accompanying Claims.

More specifically, both axle 5 and column 27 may be designed differently from those described, while still permitting stable, compact attachment to frame 2, and rotation of axle 5 about a vertical hinge axis through the centreline of the axle, and solely under the control of at least two independent motors governing wheels 11 of each axle.

## Claims

1. A rubber-tyred steering carriage comprising an axle, in turn comprising a horizontal fastening beam, at least two independent hubs connected to said beam to rotate about a common axis of rotation, and at least one rubber-tyred wheel connected to each said hub; the carriage also comprising a variable-length fastening column for transferring load onto said beam, and connected to the beam, between said hubs; connecting means for connecting said fastening column to a supporting body, so as to rotate about a first hinge axis perpendicular to said common axis of rotation, and slide axially along said first hinge axis; adjusting means for adjusting the length of said fastening column parallel to said first hinge axis; and, for each said hub, a respective drive motor connected angularly to the respective hub, and control means for controlling said motors independently, and rotating said axle about said first hinge axis.

2. A carriage as claimed in Claim 1, **characterized by** comprising hinge means interposed between said fastening column and said beam to permit relative oscillation between said beam and said fastening column about a second hinge axis perpendicular to said first hinge axis and said common axis of rotation.

3. A carriage as claimed in Claim 1 or 2, **characterized in that** said beam houses said motors.

4. A carriage as claimed in Claim 3, **characterized in that** each said motor extends coaxially with and inside the relative said hub.

5. A carriage as claimed in any one of the foregoing Claims, **characterized in that** said beam is at least partly tubular, and has opposite axial end openings for axial insertion/removal of said motors.

6. A carriage as claimed in Claim 5, **characterized by** comprising, for each said motor, a respective motor reducer aligned with said motor and at least partly housed in said beam through a respective said axial opening.

7. A carriage as claimed in Claim 5 or 6, **characterized by** comprising angular transmission means interposed between each said motor reducer and the respective said hub; said angular transmission means comprising a member located entirely outside said beam and closing a relative said axial opening.

8. A carriage as claimed in any one of the foregoing Claims, **characterized in that** said connecting means comprise first and second fastening means for connection to said supporting body; said first and second fastening means being spaced axially apart, and located at one end of the fastening column and close to said axle respectively.

9. A carriage as claimed in any one of the foregoing Claims, **characterized in that** said adjusting means for adjusting the length of said fastening column comprise a hydraulic linear actuator.

10. A carriage as claimed in Claim 9, **characterized in that** said hydraulic linear actuator comprises a sleeve hinged to said beam by said hinge means, and connected to said supporting body by said connecting means.

11. A carriage as claimed in Claim 10, **characterized in that** said hydraulic linear actuator comprises a hollow rod terminating with a piston engaging said sleeve in fluidtight manner; the rod defining an inner chamber and, together with the piston and the sleeve, an annular chamber communicating with said inner chamber; said inner chamber and said annular chamber being fed with pressurized fluid along a first inlet/outlet passage formed in an end head fitted to the axially opposite end of said rod to said piston, and connectable to a fastening body of said carriage.

12. A carriage as claimed in Claim 11, **characterized in that** said piston and said sleeve define a bottom chamber isolated from said inner chamber and said annular chamber, and communicating externally via a second pressurized-fluid inlet/outlet passage separate from the first passage and formed through said end head by a conduit extending inside said rod.

13. A carriage as claimed in Claim 12, **characterized in that** the conduit extends at least partly inside said inner chamber, coaxially with said rod.

14. A carriage as claimed in any one of Claims 1 to 8, **characterized in that** said adjusting means for adjusting the length of said fastening column comprise a powered screw-nut screw assembly.

15. A carriage as claimed in any one of Claims 1 to 8, **characterized in that** said adjusting means for adjusting the length of said fastening column comprise a linear motor having a movable member that translates parallel to said first hinge axis.

16. A rubber-tyred trailer comprising a frame defining a loading bed; and a number of rubber-tyred steering carriages beneath said loading bed; **characterized in that** at least some of said carriages are as claimed in any one of the foregoing Claims.
